**Europäisches Patentamt**

**European Patent Office**

**Office européen des brevets**

(19)

(11) **EP 1 145 088 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(51) Int Cl.⁷: **G05B 19/418**

(21) Anmeldenummer: 00908934.3

(86) Internationale Anmeldenummer:
**PCT/DE2000/000144**

(22) Anmeldetag: **17.01.2000**

(87) Internationale Veröffentlichungsnummer:
**WO 2000/042480 (20.07.2000 Gazette 2000/29)**

(54) **QUALITATSÜBERWACHUNG BEI EINER FERTIGUNG**

QUALITY SURVEILLANCE OF A PRODUCTION PROCESS

CONTROLE DE LA QUALITE DANS UNE FABRICATION

(84) Benannte Vertragsstaaten:
**AT BE CH CY DE DK ES FI FR GB GR IE IT LI LU MC NL PT SE**

(30) Priorität: **15.01.1999 DE 19901410**
**17.01.1999 DE 19901486**
**25.01.1999 DE 19902795**

(43) Veröffentlichungstag der Anmeldung:
**17.10.2001 Patentblatt 2001/42**

(73) Patentinhaber:
• **Fraunhofer-Gesellschaft zur Förderung der angewandten Forschung e.V.**
**80686 München (DE)**
• **X-FAB Semiconductor Foundries AG**
**99097 Erfurt (DE)**

(72) Erfinder:
• **OECHSNER, Richard**
**D-90449 Nuernberg (DE)**

• **TSCHAFTARY, Thomas**
**D-90762 Fuerth (DE)**
• **STRZYZEWSKI, Piotr**
**D-52134 Herzogenrath (DE)**
• **PFITZNER, Lothar**
**D-91054 Erlangen (DE)**
• **SCHNEIDER, Claus**
**D-91088 Bubenreuth (DE)**
• **HENNIG, Peter**
**D-99198 Vieselbach (DE)**

(74) Vertreter: **Leonhard, Frank Reimund, Dipl.-Ing.**
**Leonhard - Olgemöller - Fricke,**
**Postfach 10 09 62**
**80083 München (DE)**

(56) Entgegenhaltungen:
**WO-A-98/18066**     **GB-A- 2 303 720**
**US-A- 4 967 381**     **US-A- 5 225 998**
**US-A- 5 440 478**     **US-A- 5 479 340**
**US-A- 5 715 181**

EP 1 145 088 B1

**Beschreibung**

In jeder Fertigung muß die Qualität von gefertigten Produkten überwacht werden. Hierbei wird eine statistische Prozeßkontrolle zur Qualitätssicherung und -verbesserung bzw. zur Überwachung der Fertigungsprozesse eingesetzt. Grundsätzlich gibt es zwei Anforderungen an eine Qualitätsüberwachung:

- Der Maschinenbediener in der Fertigungslinie braucht eine schnelle Entscheidungsgrundlage, nach der er das gerade gefertigte und gemessene Los beurteilen kann.
- Der Qualitätsbeauftragte möchte einen schnellen und umfassenden Überblick über die Fertigungsprozesse und die Qualität aller gefertigten Produkte. Dieser Überblick muß nicht on-line sein, sondern soll vielmehr auch langfristige Trends aufzeigen und die Entscheidungsgrundlage für Prozeßänderungen oder Fehleranalyse bilden.

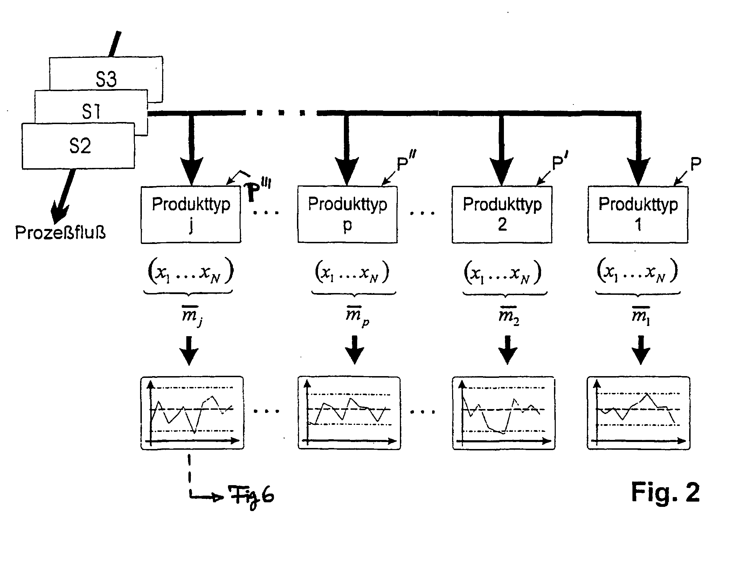

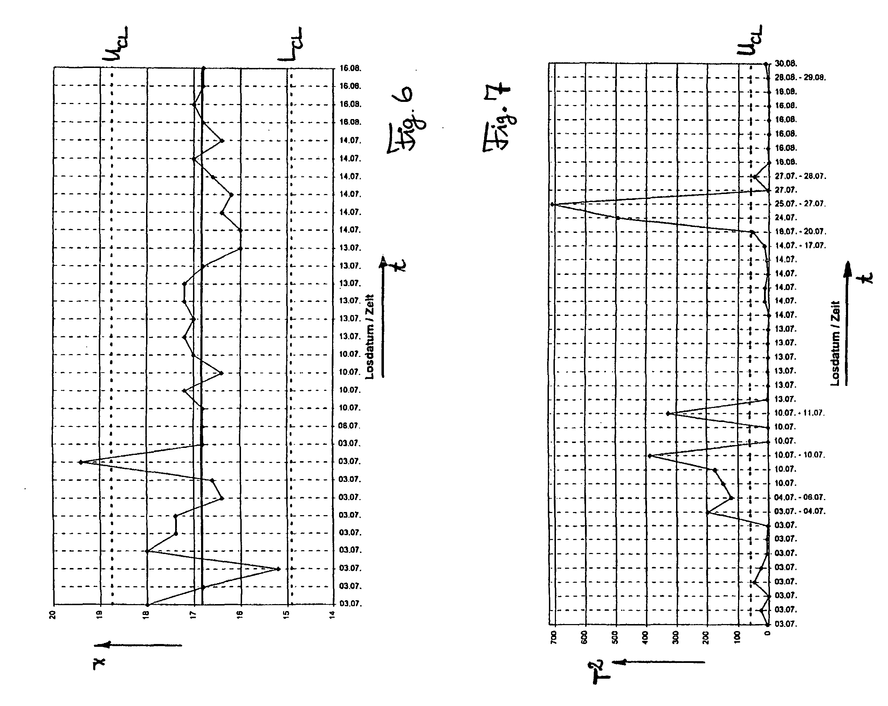

Bisher muß jeder zu kontrollierende Parameter eines Produktes mit Hilfe einer eigenen Darstellung, z. B. einer Kontrollkarte überwacht werden. Nachdem ein Produkt viele Fertigungsschritte durchläuft, benötigt man viele Kontrollkarten. Durchlaufen viele verschiedener Produkte (Produkttypen) die Fertigungslinie, so ergeben sich besonders viele Kontrollkarten, die ausgewertet werden müssen. Hierzu existieren verschiedene, mit Hilfe von Rechnern realisierte Ansätze, die die vielen Karten automatisch auf Kontrollgrenzenüberschreitung überwachen und versuchen die großen Datenmengen möglichst übersichtlich darzustellen. **Figur 2** zeigt dazu einen Fertigungsprozeß aus einer Abfolge von Prozessen (Prozeßfluß), der von j verschiedenen Produkttypen (p=1...j) durchlaufen wird, wobei für jeden Produkttyp eine Einzelkarte (z.B. eine Shewart-Karte gemäß Figur 6) aufgestellt wird. Dieses Vorgehen hat einige prinzipbedingte Nachteile:

- Die u.U. sehr große Anzahl von Einzelkarten kann nicht mehr übersichtlich visuell dargestellt werden. Es gibt keine Darstellungsweise mit der die Überwachung der gesamten Qualität aller technischen Produkte der Fertigungslinie möglich ist.
- Besitzen die verschiedenen Produkttypen z. B. ein hohe positive Korrelation und führt man die Prozeßüberwachung mit Hilfe mehrerer Einzelkarten durch, so kann nicht mehr hinreichend sicher festgestellt werden, ob sich der Fertigungsprozeß noch unter statistischer Kontrolle befindet: Liegen Stichprobenmittelwerte der verschiedenen Produkttypen innerhalb der Kontrollgrenzen sehr viel weiter auseinander als es die hohe Korrelation erwarten läßt, so befindet sich der Fertigungsprozeß mit hoher Wahrscheinlichkeit nicht mehr unter statistischer Kontrolle, obwohl keine Grenzüberschreitung von einem der Produkte signalisiert wird.

Aus der US-A-5,479,340 (Fox) ist eine Überwachung der Herstellung eines Wafers bekannt, welches ein Prozeß-Monitoring ist. Dabei werden Prozeßparameter mit einem $T^2$-Hotelling-Verfahren überwacht.

Es geht der Erfindung um das Problem, eine Vielzahl von verschiedenen (mehreren) Produkttypen bei quasi- paralleler Fertigung statistisch überwachbar zu halten, die entstehenden Datenmengen übersichtlich darzustellen und die Aussagekraft der Messungen zu erhöhen.

Zur Lösung dieses Problems der Produktmonitorings wird Anspruch 1 oder 12 vorgeschlagen.

Die Mehrproduktkontrolle erfolgt durch eine Darstellung eines Zustandsgrößenverlaufs, mit dem in Fertigungen mit hoher Produkttypenanzahl (z.B. der ASIC-Herstellung) die Fertigungsprozesse und die Qualität der gefertigten Produkte schnell und übersichtlich kontrolliert werden können. Sie erlaubt es, in jedem Fertigungsschritt die Qualität aller diesen zumindest einen Fertigungsschritt durchlaufenden Produkttypen zusammen zu überwachen und übersichtlich darzustellen. Während der festgelegten Zeitspanne werden Meßwerte aus der Fertigungsstation gesammelt und erst nach Ablauf dieser Zeitspanne zu einem verbindlichen Zustandswert in der Darstellung.

Für die gleichzeitige Überwachung der vielen Produkte kann die Mehrproduktkontrolle (zur Kontrolle der Produktmittelwerte) eingesetzt werden. Die Darstellung bildet den statistischen Zustand des Fertigungsprozesses aussagekräftig ab.

Mit der Erfindung wird es möglich, in Fertigungen mit hoher Produktanzahl (breitem Produktspektrum) die Qualität aller einen jeweiligen Fertigungsschritt durchlaufenden Produkte schnell und zuverlässig zu überwachen und die qualitätsrelevanten Daten übersichtlich visuell darzustellen. Dabei eignet sich die Mehrproduktkontrolle auch sehr gut zur längerfristigen Beurteilung der Qualität und als Entscheidungsgrundlage für evtl. langsame Änderungen an den Fertigungsprozessen.

Die statistische Grundlage für die Mehrproduktkontrolle kann die in der Literatur bekannte $T^2$-Hotelling Sta- tistik sein (Anspruch 14, 17). Diese wird hier zur Überwachung eines technischen Parameters für sehr viele "quasi- parallel" gefertigte technische Produkttypen (z.B. in der Halbleiterfertigung) angewendet.

Die Qualitätsüberwachung mit Hilfe der $T^2$-Mehrproduktkontrolle bietet im Vergleich mit dem Stand der Tech- nik bedeutende Vorteile:

EP 1 145 088 B1

- Es steht eine schnelle und zuverlässige Aussage über den statistischen Zustand des technischen Fertigungsprozesses zur Verfügung.

- Da Korrelationen, die zwischen verschieden gestalteten Produkten bestehen können, bei der Darstellung mit berücksichtigt werden, ist eine statistisch eindeutige Aussage unabhängig von der Stärke der Korrelationen möglich.

- Die Qualität aller in dem Fertigungsprozeß gefertigten Produkte kann übersichtlich dargestellt werden.

- Eine zeitlich komprimierte Darstellung erlaubt Langzeit-Qualitätsmanagement und - überwachung, insbesondere die Erkennung von Trends im Fertigungsprozeß.

Das Verfahren verwendet die Mittelwerte einer Stichprobe der in ihrem Fertigungszustand veränderten Produkte. Dieser Mittelwert wird als Teil eines mehrdimensionalen Mittelwertes plaziert. Der mehrdimensionale Mittelwert ist zwar jederzeit in einen Zustandswert umrechenbar, wird aber erst nach einer festgelegten Zeitspanne in einen solchen verbindlichen Zustandswert umgerechnet, der entweder an einem Sichtschirm oder graphisch dargestellt wird. Die festgelegte Zeitspanne ergibt sich aus dem Fertigungsprozeß. Sie ist entweder eine maximale Zeitspanne (Anspruch 2), sie kann sich aber auch daraus ergeben, daß ein Produkttyp der ersten Typenanzahl erneut in der überwachten Fertigungsstation eine physikalische Änderung erfahren soll. Dann würde dasselbe Produkt zwei gemessene Mittelwerte ergeben und bevor dieses geschieht, wird der sich bis dahin aufgebaute mehrdimensionale Mittelwert in einen verbindlichen Zustandswert umgerechnet. Ein weiteres Kriterium kann die festgelegte Zeitspanne vorgeben. Sind alle überwachten Produkttypen schon in der überwachten Fertigungsstation physikalisch verändert worden, so kann ebenfalls ein verbindlicher Zustandswert errechnet werden, nachdem kein weiterer gemessener Mittelwert mehr zur Vervollständigung aller Produktmittelwerte in dem mehrdimensionalen Mittelwert benötigt wird. Dieser Aspekt ist aber ein Unterfall des zuvor genannten Kriteriums; die nächste Anforderung eines Produkttypes in der überwachten Fertigungsstation würde ohnehin das zuvor genannte Kriterium erfüllen und das Berechnen des verbindlichen Zustandswertes auslösen.

Es ergibt sich, daß ein Berechnen des Zustandswertes auch häufiger geschehen kann (Anspruch 10), jedes Mal dann, wenn ein neuer Produktmittelwert zu dem mehrdimensionalen Mittelwert hinzutritt. Dieser Wert bleibt hypothetisch, er wird nicht in den verbindlichen Verlauf der Zustandsgröße eingetragen.

Ändert sich die Anzahl der überwachten Produkttypen, also die "erste Typenzahl", so muß ein neuer Initialisierungslauf erfolgen. Die Dimension der verwendeten Vektoren ändert sich dabei, ebenso wie die angenommenen Produktmittelwerte (Anspruch 11).

Die angenommenen Produktmittelwerte sind diejenigen Werte, die aus Vorlaufrechnungen für einen jeweiligen Produkttyp ermittelt werden (Anspruch 9, Anspruch 3). Ein Produktmittelwert ersetzt in beschränktem Umfang einen gemessenen Mittelwert in dem mehrdimensionalen Mittelwert (Mittelwertvektor). Ist bei der Berechnung, oder bei Bevorstehen einer Berechnung des Zustandswertes ein Produkt in dem überwachten Fertigungsprozeß nicht physikalisch verändert worden, so wird sein Produktmeßwert (der aus Meßwerten bestehende Produktmittelwert) durch den vorgegebenen Produktmittelwert ersetzt. Der Mittelwert führt bei einer verwendeten Subtraktion (Anspruch 3) dazu, daß dieses Produkt mit Meßwerten in die Zustandsgröße als Einzelpunkt nicht eingeht, also neutral bleibt.

Der Verlauf der Zustandsgröße mit seinen punktweise aufgetragenen Zustandswerten wird mit einem Grenzwert verglichen (Anspruch 7), um ein Signal auszugeben.

Die Mehrproduktkontrolle, die zuvor und später erwähnt wird, bezieht sich auf die Darstellung der technisch gemessenen Daten aus dem Fertigungsprozeß in einer übersichtlichen Weise. Die bildliche Darstellung kann auf mehrere Weisen erfolgen, es kann ein Oszillogram oder eine graphische Darstellung gewählt werden, ebenso kann die Darstellung auf einer Karte eingetragen werden oder von einem Drucker ausgedruckt werden. Allein die Darstellung selbst beeinflußt in ihrer Art und Weise nicht das technische Konzept, das von technischen Meßgrößen eng am technischen Prozeß angelehnt seinen Ausgang, Verlauf und Ergebnis zeigt. Die Erfindung ist bereits dann fertig oder abgeschlossen, wenn die bildliche Darstellung, ausgedruckt, angezeigt oder eingetragen vorliegt, ihre (menschliche) Bewertung selbst ist außerhalb des erfindungsgemäßen Erfolges. Es kommt auf menschlich qualifizierende Einflußnahmen also nicht an, diese liegen vielmehr erst nach der fertigen Erfindung.

Figur 1          veranschaulicht ein Beispiel einer Mehrproduktüberwachung gemäß der Erfindung.

Figur 2          zeigt die übliche Vorgehensweise bei der Aufstellung von Shewart-Karten in einem Beispiel.

Figur 3          zeigt Beispiele für die Zeitpunkte der Mehrproduktkontrolldarstellung.

Figur 4          ist eine Darstellung der Messung in einem Fertigungsprozeß S1.

**Figur 5**      verdeutlicht eine Ablaufsteuerung zur Figur 1.

**Figur 6**      ist eine Shewart-Karte.

**Figur 7, Figur 8**   sind lineare und logarithmische Darstellung der von mehreren Produkten stammenden Zustandsgröße $T^2$, hier aufgezeichnet auf einer Karte.

In Übersicht dargestellt, zeigt **Figur 2** eine Prozeßüberwachung im Prozeßfluß mit den sequentiell aneinandergereihten Schritten S3, S1 und S2 (sowie ggf. weiterer Schritte) und die Überwachung von mehreren Produkttypen, wobei die Produkttypen mit P, P', P'' und P''' bezeichnet sind, hier mit einer Laufvariablen p = 1,2,...,p,...j. Jeder Produkttyp hat einen "Produktmittelwert", der aus einer Stichprobe des Produktes errechnet wird, die mehrere Meßwerte x liefert. Die mehreren Meßwerte $x_1...x_N$ ergeben einen Mittelwert $\overline{m}_p$. Für jeden Produkttyp wird eine Kontrolldarstellung gewählt, die über der Los-Nummer (dem Losdatum) aufgezeichnet ist. Werden mehrere Parameter eines Produktes überwacht, wird für jeden Parameter eine solche Darstellung erzeugt. Der Vergleich der Produktmittelwerte mit den Kontrollgrenzen ergibt die statistische Überwachung des Prozeßflusses, ersichtlich ist aber, daß bei 10 Produkttypen mit jeweils 3 Parametern schon 30 Kontrollkarten geführt werden müssen und die Auswertung immer schwieriger wird, je mehr Produkte und Parameter überwacht werden. Die in Figur 2 gezeigten Darstellungen sind vergrößert in einem Beispiel in **Figur 6** ersichtlich. Die dort dargestellte Shewart-Karte zeigt die auf Stichproben beruhenden Mittelwerte über der Zeitachse, die als Losdatum benannt ist. Jeweils ein Punkt ergibt sich dann, wenn eine physikalische Beeinflussung des spezifischen Produktes oder des spezifischen Parameters erfolgt ist. Deshalb ist die Zeitachse nicht äquidistant, sie ist aber daran gebunden, daß immer eine Veränderung des überwachten Parameters stattgefunden hat und dann sogleich ein zugeordneter Punkt auf der Abszisse erstellt wird. Die Verbindung der Punkte gibt den Verlauf einer Zustandsgröße x. Die Darstellung zeigt die Verbindung der punktweise aus dem Prozeß errechneten Mittelwerte. Dieser Mittelwertverlauf wird verglichen mit einer oberen Grenze $U_{CL}$ und einer unteren Grenze $L_{CL}$, die strichliniert eingetragen sind. Zum Datum des 3. Juli (vorletzter Punkt an diesem Datum) überschreitet der Mittelwert die obere Grenze.

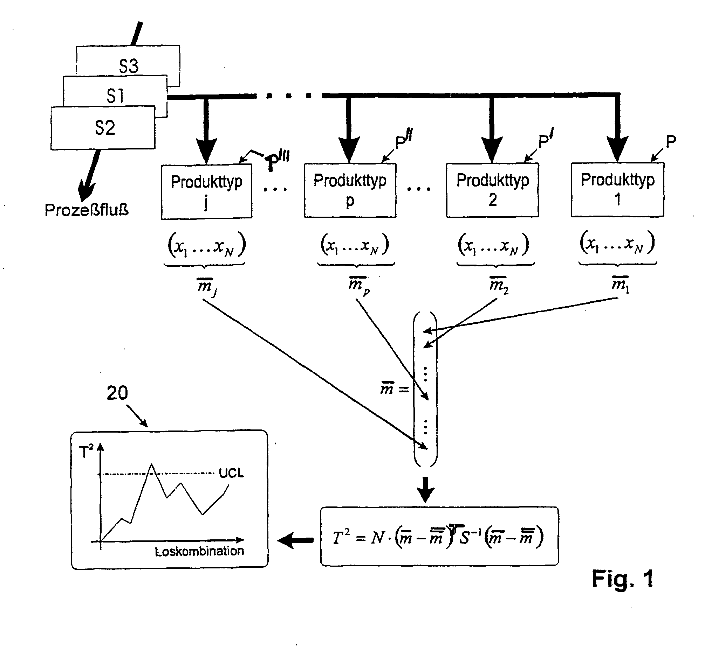

**Figur 1** zeigt das Verfahren, das hier vorgeschlagen wird und das im folgenden erläutert wird. Hier wird ein gemeinsamer Mittelwert $\overline{m}$ berechnet, indem Produktmittelwerte $\overline{m}_p$ der einzelnen Produkttypen gemeinsam Einfluß nehmen, um gemeinsam einen Punkt im Zustandsverlauf zu ergeben. Ohne weiteres ersichtlich ist, daß aus den vier dargestellten Produkttypen der Figur 1 nur eine Darstellung 20 eines Zustandgrößenverlaufes ermittelt wird und die Übersicht auch bei breitem Produktspektrum (großer Produktanzahl) erhalten bleibt.

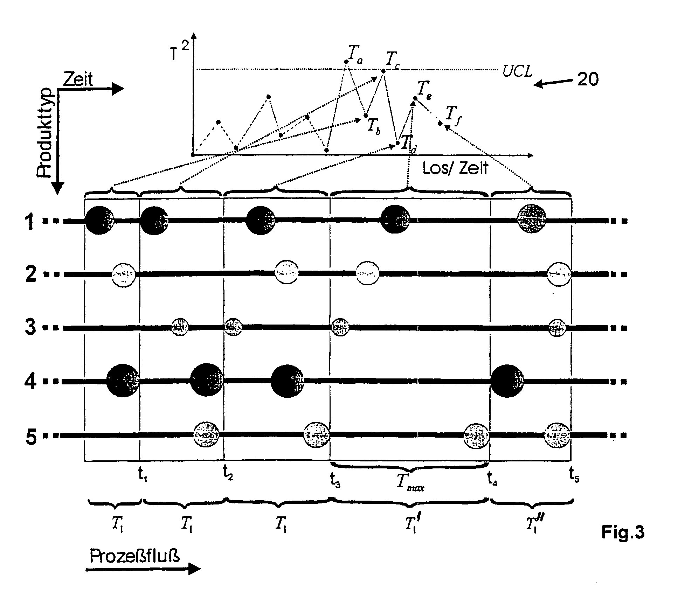

Der Prozeßfluß, der in Figur 1 gezeigt ist, ergibt sich in einer schematischen Darstellung auch aus **Figur 3**. Dort sind die einzelnen Produkttypen mit Kreisen unterschiedlichen Durchmessers gekennzeichnet. Die dort dargestellten Produkttypen 1 bis 5 durchlaufen einen Fertigungsschritt S1.

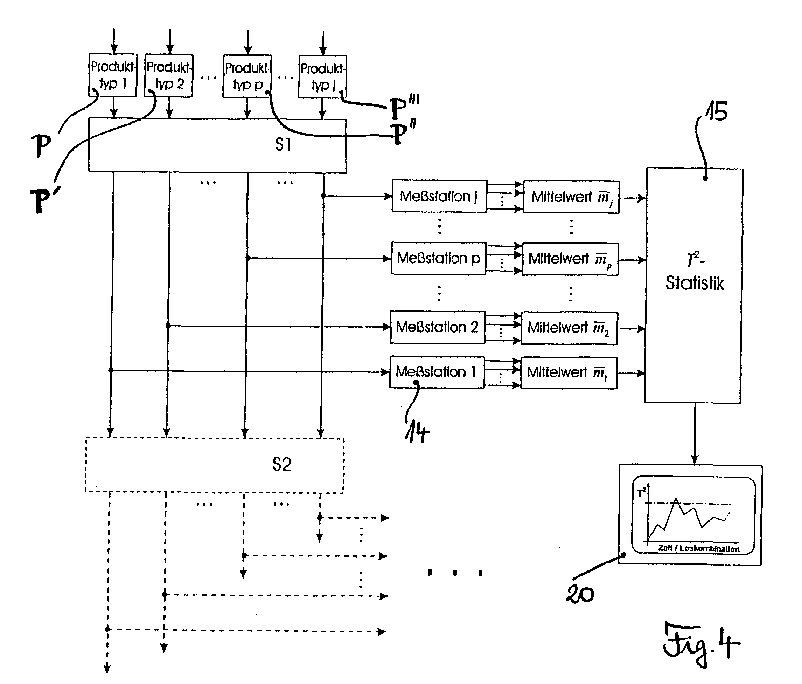

Vor Beginn der Mehrproduktkontrolle wird ein meßbarer Produktparameter, der mit Hilfe der Mehrproduktkontrolle überwacht werden soll, festgelegt. Dieser muß nach einem technologischen Prozeßschritt für alle zu kontrollierenden Produkte meßtechnisch erfaßbar sein. Mögliche Produktparameter sind z.B. Strukturbreiten d1,d2, Schichtdicken b1, Konzentrationen etc. **Figur 4** zeigt die Meßeinrichtungen 14 an der Station S1 der Fertigung. Die Meßeinrichtung 14 ist bildlich der Fertigungsstation S1 nachgeordnet, soll aber zum Ausdruck bringen, daß sie der Meßstation S1 so zugeordnet ist, daß es um die Messung der genannten Produktparameter geht, die natürlich erst dann gemessen werden können, wenn sie von der Station S1 physikalisch verändert worden sind. Die physikalische Veränderung setzt den Abschluß zumindest einer Veränderung in dieser Station voraus, so daß die Messung prozeßlogistisch "nach Durchlauf durch diese Fertigungsstation" erfolgt. Der konkrete Aufbau der Messung selbst kann auch in der Fertigungsstation S1 selbst integriert sein, also durch integrierte Meßtechnik 14 realisiert sein. Die bildliche Darstellung in Figur 4 bringt dabei nur den logischen Ablauf zum Ausdruck, nicht den konkreten meßtechnischen Aufbau.

Nachdem ein Produkt bzw. mehrere Produkte eines Typs den zu überwachenden Fertigungsschritt S1 durchlaufen haben und physikalisch verändert wurden, wird eine Stichprobe gezogen, d.h. auf einem oder verschiedenen Wafem werden N Stichprobenmessungen $m_1...m_N$ vorgenommen. Aus diesen N Stichprobenmessungen wird der Stichprobenmittelwert $\overline{m}_p$ für dieses Produkt gebildet:

$$\overline{m}_p = \frac{m_1 + m_2 + ... m_N}{N} \qquad \text{Gl. 3.1.2}$$

Für jedes nachfolgend gefertigte Produkte wird ebenso verfahren und der für jedes Produkt charakteristische Stichprobenmittelwert $\overline{m}_p$ bestimmt, der als Produktmittelwert eines Produkts angenommen wird.

Nachdem die Produkte i.A. nicht gleichzeitig gefertigt werden, man jedoch trotzdem eine komprimierte und übersichtliche Darstellung 20 haben möchte, wird ein Zeitraum T1 festgelegt, in dem die gefertigten Produkte zusammenfaßt und als "gleichzeitig gefertigt" betrachtet werden. Mit seiner Hilfe kann die Darstellung an unterschiedliche Fertigungsdichten angepaßt werden. Der Zeitraum ist nicht konstant, wird aber für die Meßwerte $T_a, T_b, T_c$ als konstant dargestellt.

Alle Produkte, die in der Mehrproduktkontrolle berücksichtigt werden sollen, werden mit ihren Mittelwerten zum Vektor $\bar{m}$ zusammengefaßt. Wird ein Produkt innerhalb des entsprechenden Zeitraums in einer Station nicht bearbeitet, so wird für seinen Stichprobenmittelwert $\bar{m}_p$ ein bekannter Produktmittelwert $\bar{\bar{m}}_p$ eingesetzt. Für den Vektor $\bar{m}$ ergibt sich allgemein für j Produkte:

$$\bar{m} = \begin{bmatrix} \bar{m}_1 \\ \bar{m}_2 \\ \vdots \\ \bar{m}_p \\ \vdots \\ \bar{m}_j \end{bmatrix} \qquad\qquad \text{Gl. 3.1.3}$$

$\bar{m}_p$: Stichprobenmittelwert des $p$-ten Produkts p=1,2...j, auch als Produktmittelwerte bezeichnet. Die mehrdimensionale Darstellung aller Mittelwerte bildet einen Vektor (Mittelwertvektor). Dieser Vektor findet Eingang in die $T^2$- Hotelling Statistik:

$$T^2 = N(\bar{m}-\bar{\bar{m}})^T S^{-1} (\bar{m} - \bar{\bar{m}}) \qquad \text{Gl. 3.1.1}$$

$T^2$ :  Wert der Testverteilung
$N$ :  Stichprobengröße
$\bar{m}$ :  Vektor der Stichprobenmittelwerte (gemessen)
$\bar{\bar{m}}$ :  Vektor der Produktmittelwerte (vorgegeben)
$S$ :  Kovarianzmatrix

Nach Gl. 3.1.1 wird von $\bar{m}$ der Vektor der Produktmittelwerte nach 3.1.4 subtrahiert.

$$\bar{\bar{m}} = \begin{bmatrix} \bar{\bar{m}}_1 \\ \bar{\bar{m}}_2 \\ \vdots \\ \bar{\bar{m}}_p \\ \vdots \\ \bar{\bar{m}}_j \end{bmatrix} \qquad\qquad \text{Gl. 3.1.4}$$

Dadurch wird bewirkt, daß lediglich die Abweichungen von den jeweiligen Produktmittetwerten in die Mehrproduktkontrolle eingehen. Der dadurch entstandene Differenzvektor wird in Gl. 3.1.1 von rechts und von links an die invertierte Kovarianzmatrix anmultipliziert. Das mit der Stichprobengröße $N$ multiplizierte Skalar ergibt schließlich den Wert der Testverteilung für die im betrachteten Zeitraum gefertigte Produktkombination. Dieser $T^2$-Wert wird als Zustandswert in die Mehrproduktkontrolle aufgenommen (angezeigt, gespeichert oder auf einer Karte eingetragen).

Zur Berechnung des Wertes der Testverteilung wird der Vektor der Produktmittelwerte $\bar{\bar{m}}$ und die Kovarianzmatrix $S$ verwendet. Diese werden beim Anpassen der Mehrproduktkontrolle an den konkreten Anwendungsfall bestimmt. Den Ausgangspunkt für die Bestimmung der Produktmittelwerte und der Kovarianzmatrix bilden $k$ Beobachtungsmatrizen (Gl. 3.1.5), die bei der Einführung der Karte aufgestellt werden müssen. Sie beinhalten die $N$ Stichprobenmessungen auf $j$ Produkten.

$$M_k = \begin{bmatrix} m_{k11} & m_{k12} & \cdots & m_{k1j} \\ m_{k21} & m_{k22} & \cdots & m_{k2j} \\ \vdots & \vdots & \cdots & \vdots \\ m_{kN1} & m_{kN2} & \cdots & m_{kNj} \end{bmatrix} \qquad \text{Gl. 3.1.5}$$

Der Index k bedeutet hier die Anzahl der Beobachtungsmatrizen, also die Anzahl der Stichproben für jedes Produkt, die zur Schätzung von Mittelwert und Kovarianzmatrix herangezogen werden. $k$ wird auch als Vorlauf bezeichnet. Der Stichprobenmittelwert $\overline{m}_{kp}$ und die Stichprobenvarianz $S_{kp}^2$ für das $p$-te Produkt und die $k$-ten Vorlaufmessung ergeben sich aus Gl. 3.1.5 zu:

$$\overline{m}_{kp} = \frac{1}{N} \sum_{i=1}^{N} m_{kip} \qquad \text{Gl. 3.1.6}$$

$$S_{kp}^2 = \frac{1}{(N-1)} \sum_{i=1}^{N} \left( m_{kip} - \overline{m}_{kp} \right)^2 \qquad \text{Gl. 3.1.7}$$

Die Kovarianz $S_{kp_1p_2}$, welche die Korrelation zwischen dem Produkt $p_1$ und dem Produkt $p_2$ für die $k$-te Stichprobe beschreibt, lautet:

$$S_{kp_1p_2} = \frac{1}{(N-1)} \sum_{i=1}^{N} \left( m_{kip_1} - \overline{m}_{kp_1} \right)\left( m_{kip_2} - \overline{m}_{kp_2} \right) \qquad \text{Gl. 3.1.8}$$

Im nächsten Schritt werden die über $k$ Vorlaufmessungen ermittelten Stichprobenmittelwerte gemittelt und man erhält den Produktmittelwert für das $p$-te Produkt. $R$ bezeichnet die maximale Anzahl von Vorlaufswerten $k$:

$$\overline{\overline{m}}_p = \frac{1}{R} \sum_{k=1}^{R} \overline{m}_{kp} \qquad \text{Gl. 3.1.9}$$

Schreibt man alle Produktmittelwerte der einzelnen Produkte als Vektor, so ergibt sich der gesuchte Vektor der Produktmittelwerte $\overline{\overline{m}}$ aus Gl. 3.1.4.

Analog zum Vorgehen bei der Schätzung der Produktmittelwerte werden auch die Stichprobenvarianzen und Stichprobenkovarianzen über den Vorlauf $k$ gemittelt:

$$S_p^2 = \frac{1}{R} \sum_{k=1}^{R} S_{kp}^2 \qquad \text{Gl. 3.1.10}$$

$$S_{p_1p_2} = \frac{1}{R} \sum_{k=1}^{R} S_{kp_1p_2} \qquad \text{Gl. 3.1.11}$$

Schreibt man Gl. 3.1.10 und Gl. 3.1.11 als Matrix, so ergibt sich die gesuchte symmetrische Kovarianzmatrix $S$:

$$S = \begin{bmatrix} S_1^2 & S_{12} & \cdots & S_{1p_2} & \cdots & S_{1j} \\ S_{12} & S_2^2 & \vdots & \vdots & \cdots & S_{2j} \\ \vdots & \vdots & S_p^2 & \vdots & \cdots & \vdots \\ S_{1p_2} & \vdots & \vdots & \ddots & & S_{p_1j} \\ \vdots & \vdots & \vdots & & \ddots & \vdots \\ S_{1j} & S_{2j} & \cdots & S_{p_1j} & \cdots & S_j^2 \end{bmatrix} \qquad \text{Gl. 3.1.12}$$

Dieses Überwachungsverfahren ist in der Lage, die Qualität aller den Prozeßfluß durchlaufenden Produkte bzw. Produkttypen zu überwachen und qualitätskritische Abweichungen zu signalisieren. Dabei ist es möglich, die Qualität sehr vieler, einen Fertigungsschritt durchlaufenden Produkte mit Hilfe einer einzigen, übersichtlichen Kontrolldarstellung zu überwachen. Hierbei werden die Korrelationen, die zwischen Produkten bestehen, die den gleichen Fertigungsschritt durchlaufen, mit einbezogen. Auch ist berücksichtigt, daß die verschiedenen Produkte unterschiedliche Fertigungshäufigkeiten besitzen und somit in sehr unterschiedlicher Reihenfolge den zu überwachenden Fertigungsschritt - hier dargestellt ist S1 - durchlaufen. Weiter wird eine Beurteilung der statistischen Stabilität des Fertigungsprozesses durch Auswertung einer einzigen Kontrolldarstellung 20 zuverlässig möglich.

Bevor eine Mehrproduktkontrolle in der Fertigung eingesetzt wird, liegen Schätzungen für die Produktmittelwerte und die Kovarianzmatrix vor, wie zuvor beschrieben.

Um die Bereiche in denen ein Einsatz der Mehrproduktkontrolle sinnvoll erscheint näher abzugrenzen, soll im folgenden der Produktionsablauf (Prozeßfluß) in einer flexiblen Fertigung genauer beschrieben werden:

Hauptcharakteristikum für eine flexible Fertigung ist die Anforderung schnell und flexibel auf Kundenaufträge zu reagieren. Deswegen werden i.A. viele verschiedene Produkte, die sich durch Prozeßparameter, Prozeßsequenzen und Losgröße unterscheiden, einen Prozeßfluß durchlaufen. Dabei soll eine lückenlose Qualitätsüberwachung und eine Kontrolle der Fertigungsprozesse gewährleistet sein.

Nach dem bisherigen Monitoringkonzept gemäß Figur 2 muß für jedes Produkt und jeden zu überwachenden Prozeßparameter eine Kontrollkarte aufgestellt, z. B. nach Figur 6, und auf Kontrollgrenzenüberschreitung überwacht werden. Wegen der Vielzahl der Produkte ergeben sich sehr viele Kontrollkarten, die überwacht und ausgewertet werden müssen.

Statt für jedes Produkt, das einen Fertigungsschritt durchläuft, eine eigene Kontrollkarte aufzustellen und zu überwachen, erfolgt eine Mehrproduktkontrolle für alle den Fertigungsprozeß durchlaufenden Produkte, indem aus Produktmittelwerten der $T^2$-Wert berechnet wird. Damit kann die Qualität aller Produkte und die Stabilität des Fertigungsprozesses schnell und übersichtlich überwacht werden.

Nachdem jedoch die Produkte einen Fertigungsschritt i.A. nicht gleichzeitig durchlaufen, sondern nacheinander gefertigt werden, kann man zur übersichtlicheren Darstellung die Produktmittelwerte $\overline{m}_p$ nach bestimmten Regeln zusammenfassen

**In Figur 3** sind fünf unterschiedliche Produkte (Typen 1 bis 5) dargestellt, die einen Fertigungsschritt durchlaufen. Die Losgrößen variieren zwischen den Produkten, was durch unterschiedlich große Kreise dargestellt ist. Für die Erstellung der Mehrproduktkontrolle können Meßwerte der nacheinander gefertigten Produkttypen 1 bis 5 solange zusammengefaßt werden, bis entweder ein maximaler Zeitraum $T_{max}$ erreicht ist, oder ein Produkt erneut in derselben Station gefertigt wird. Jeder Zeitabschnitt ergibt einen Punkt $T_a, T_b, T_c$ in der Mehrproduktkontrolle bzw. der diesbezüglichen Darstellung 20. Im aktuellen Zeitraum gerade nicht gefertigte Produkte werden bei der Berechnung des $T^2$-Wertes nicht berücksichtigt und gehen somit nicht in den aktuellen $T^2$-Punkt ein.

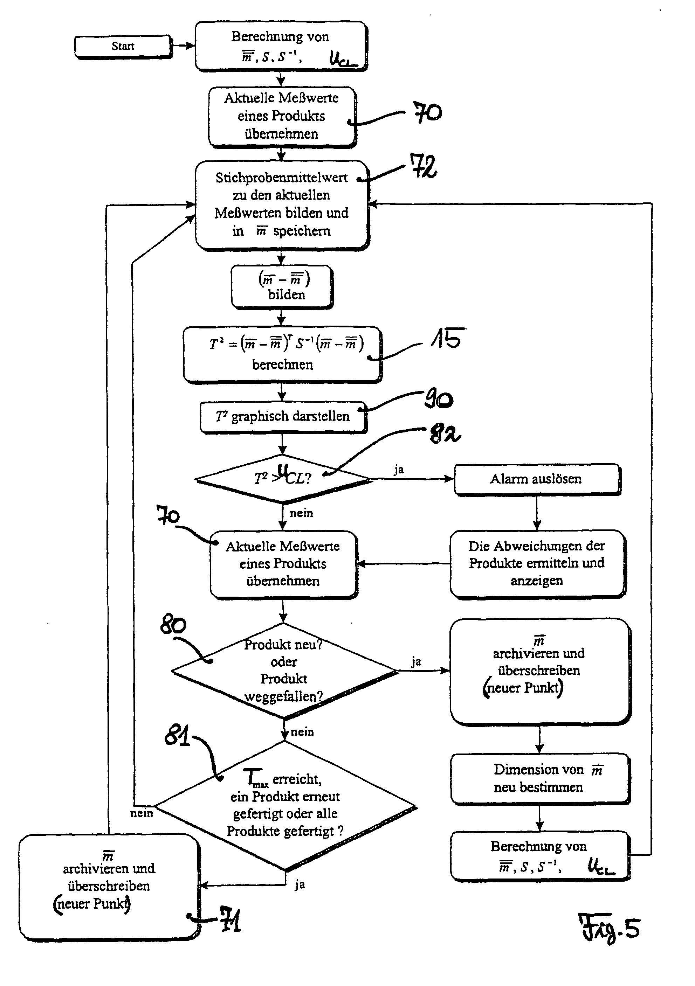

Figur 3 veranschaulicht mehrere Zeitpunkte $t_1$, $t_2, t_3$, $t_4$ und $t_5$ und veranschaulicht die Möglichkeiten, die Zeitspanne $T_1$ festzulegen und damit festzulegen, wann ein für den Zustandsverlauf 20 relevanter Meßwert $T_a$, $T_b$, $T_c$ aufgetragen oder dargestellt wird. Die Berechnung dieses Meßwertes findet sich in **Figur 5,** auf die gemeinsam mit der hier beschriebenen Figur 3 Bezug genommen wird. In der ersten Zeitspanne von 0 bis $t_1$ wurden die Produkttypen 1, 2 und 4 gefertigt, wobei Produkttyp 1 zuerst und danach gleichzeitig die Produkttypen 2 und 4 gefertigt wurden. Nachdem Produkttyp 1 zum Zeitpunkt $t_1$ erneut eine physikalische Veränderung in der Fertigungsstation S1, die hier dargestellt ist, verlangt, wird ein Punkt $T_b$ errechnet und aufgetragen. Für die Produkttypen 3 und 5 wurde in dem betrachteten Zeitabschnitt zwischen 0 und $t_1$ keine Fertigung in dem Fertigungsprozeß S1 verlangt, so daß insoweit auch keine Meßwerte zur Verfügung stehen, die mit der Einrichtung gemäß **Figur 4** hätten gemessen werden können. Statt dessen wird ein zuvor beschriebener vorgegebener Mittelwert verwendet, der für die Produkttypen 3 und 5 bereitsteht und bei der angewandten Berechnung gemäß Gleichung 3.1.1. keinen die Amplitude beeinflussenden Beitrag leistet.

Im zweiten betrachteten Zeitintervall zwischen $t_1$ und $t_2$ werden die Produkttypen 1, 3, 4 und 5 gefertigt. Hier wird der Produkttyp 2 nicht gefertigt bzw. in seinem physikalischen Zustand nicht verändert. In der Station begehrt der Produkttyp 3 erneut eine physikalische Beeinflussung, so daß ein neuer Zustandswert gemäß Gleichung 3.1.1. errechnet wird, der als Wert $T_c$ in der Darstellung 20 aufgetragen wird. Für den Produkttyp 2 wurde für den Zeitabschnitt $t_1$ bis $t_2$ sein Produktmittelwert verwendet, der neutral ist.

Im Zeitbereich $t_2$ bis $t_3$ zeigt sich, daß alle fünf Produkttypen 1 bis 5 in der Station S1 physikalisch verändert worden sind. Es kann also gleich nach Einflußnahme auf den Produkttyp 5 ein neuer Zustandswert $T_d$ errechnet werden. Praktisch zeitgleich begehrt der Produkttyp 3 eine erneute physikalische Veränderung in der Station S1, so daß ohnehin bei Wiederholung der physikalischen Bearbeitung eines Produkttypes ein Zeitraum $T_1$ als abgeschlossen betrachtet worden wäre.

Es zeigt sich aus den drei vorgenannten Zeitabschnitten, daß die erneute Fertigung eines schon einmal gefertigten Produkts festlegt, wann das Ende des ersten Zeitabschnittes $T_1$ ist. Sind aber alle überwachten Produkttypen in der Station S1 schon gefertigt worden, so würde die nächste Anforderung in jedem Fall dieses Kriterium erfüllen, so daß sogleich die Zeit $T_1$ als beendet betrachtet werden kann und ein Zustandswert in der Grafik 20 aufgetragen werden kann.

Im folgenden Zeitintervall $T_1'$ findet die maximale Zeit Anwendung , $T_1' = T_{max}$. Hier sind die Produkttypen 1 bis 3 und 5 gefertigt worden. Es wollte in dem maximal festgelegten Zeitintervall kein weiterer Produkttyp von der Station S1 eine physikalische Veränderung erfahren, so daß der Grenzwert Anwendung findet und festlegt, wann die Berechnung des Zustandswertes $T_e$ erfolgt. Für Produkttyp 4 wird für diesen Zeitraum $T_1'$ der Produktmittelwert angenommen.

Im letzten aufgezeichneten Zeitabschnitt $T_1''$ wurden alle fünf Produkttypen gefertigt, diesmal in einem kürzeren Zeitraum, als in den Zeiträumen $t_1$, $t_2$ und $t_3$. Der Zeitraum zwischen $t_4$ und $t_5$ bildet somit einen Zustandswert $T_f$ ab, berechnet nach der Gleichung 3.1.1., wie zuvor erläutert.

Das so erhaltene Diagramm 20, das die Zustandsgröße $T^2$ zeigt, ist ein Maßstab für die Qualität der Fertigung, hier im Fertigungsprozeß S1. Sie wird verglichen mit einem oberen Kontrollwert $U_{CL}$, dessen Überschreitung Unregelmäßigkeiten anzeigt.

Die Berechnung des jeweiligen verbindlichen Zustandswertes erfolgt also nicht immer dann, wenn eine physikalische Änderung eines Produkttypes erfolgt ist, sondern erst nach Ablauf einer festgelegten Zeitspanne, die sich aus dem Prozeßfluß ergibt. Erst dann wird der für die Darstellung 20 relevante Zustandswert $T_a$, $T_b$, ... verbindlich. Es kann im Flußdiagramm der **Figur 5** aber auch sein, daß der Zustandswert jedesmal berechnet wird, z.B. in einer dort dargestellten inneren Schleife, für die verbindliche Darstellung 20 aber nicht übernommen wird. Die Übernahme erfolgt erst dann, wenn die festgelegte Zeitspanne $T_1$, wie erläutert, abgelaufen ist, wobei sie entweder die maximale Zeitspanne ist oder diejenige Zeitspanne, nachdem alle Produkte in dem Fertigungsprozeß S1 (Fertigungsstation) gefertigt wurden. Ein Unterfall letzteren Kriteriums ist es, wenn ein und derselbe Produkttyp erneut in derselben Fertigungsstation eine physikalische Änderung begehrt, ohne daß zuvor ein verbindlicher Zustandswert in die Darstellung 20 eingetragen worden ist.

Die Speicherung der in Figur 4 als Messung dargestellten Prozeßgrößen, die Strukturdicken oder Strukturbreiten aus einem Halbleiter-Fertigungsprozesses sein können, ergibt eine inkrementelle Ergänzung eines Mittelwertvektors, dessen einzelne Mittelwerte nach und nach mit Meßwerten der unterschiedlichen Produkttypen aufgefüllt werden und dann mit Gleichung 3.1.1 in einem Zustandswert umgerechnet werden. Meßwerte, die bis zu ihrer Berechnung noch fehlen, werden vorübergehend durch Produktmittelwerte aufgefüllt, die hinsichtlich des Ergebnisses neutral sind. Es kann bei dem beschriebenen Verlauf auch vorkommen, daß nur ein Meßwert in den Mittelwertvektor eingeht, während alle übrigen Meßwerte die Produktmittelwerte sind. Es kann theoretisch sogar so sein, daß überhaupt kein Produkttyp in der maximalen Zeitspanne $T_{max}$ eine Bearbeitung begehrt, so daß von der Berechnung 15 nur Produktmittelwerte verwendet werden und damit ein neutraler Zustandswert ermittelt wird.

Das zuvor beschriebene Vorgehen anhand der Figur 3 läßt sich auch im Rahmen eines Flußdiagramms der **Figur 5** darstellen, das hier durch expliziten Bezug vollumfänglich einbezogen wird, nachdem der Fachmann ohne weiteres den dort dargestellten Abfragen (Rauten) und Funktionen (Rechtecke) den Steuerungsprozeß der Ermittlung eines Zustandsgrößenverlaufs entnehmen kann. Das beschriebene Ablaufdiagramm ist Kennzeichen einer softwaretechnischen Ablaufsteuerung, kann aber auch in entsprechenden Hardware-Komponenten realisiert werden.

Ausgangspunkt "Start" ist die Berechnung der Kovarianzmatrix und der Produktmittelwerte (Vektor dieser Mittelwerte) sowie der Grenzen, mit denen der Zustandsgrößenverlauf verglichen werden soll. Die aktuellen Meßwerte eines Produktes werden übernommen, welche Meßwerte anhand der Figur 4 bei der Messung noch beschrieben werden sollen. Die Steuerung der **Figur 5** zeigt im Funktionsblock 90 die grafische Darstellung der Zustandsgröße im Diagramm 20, die aber aufgrund der bestehenden Schleife immer wieder überschrieben wird, also einen vorläufigen Charakter trägt. Aufgrund der Abfrage 82 werden auch vorläufige Zustandsgrößen zur Alarmauslösung verwendet, in entsprechender Abwandlung können Alarmauslösungen und die zugehörige Abfrage 82 auch erst vor dem Funktionsblock 71 nach dem Ausgang der inneren Schleife gelegt werden.

Die Funktionsblöcke 70 in der Schleife und als Eingangsfunktion vor der Schleife sind identisch, sie betreffen die aus Figur 4 ersichtliche Meßwertübernahme aus dem Prozeßfluß bzw. der dort spezifisch dargestellten Fertigungsstation S1.

Das zuvor anhand der Figur 3 beschriebene Kriterium findet sich in der Abfrage 81 der Figur 5. Ist eines der Kriterien erfüllt, ist die Zeitspanne T, festgelegt bzw. abgelaufen. Ein verbindlicher Punkt in der Zustandsgrafik 20 entsteht.

Kommen neue Produkte hinzu, fällt ein Produkt weg oder ändern sich die Parameter, die gemessen werden, leitet die Abfrage 80 ein Ende der Schleife ein und beginnt so, wie eingangs nach "Start" beschrieben, um erneut in die beschriebene Schleife einzumünden.

Die Auffüllung Zug um Zug des Mittelwertvektors durch entsprechendes Überspeichern des alten Wertes findet in der Funktion 72 oder 71 statt. Der Zustandswert des Verlaufes der Darstellung 20 ergibt sich entweder aus der Funktion 90 oder im Rahmen der Funktion 71, wie zuvor beschrieben.

Die Darstellung der Zustandswerte 20 aus **Figur 4** ist Folge der Umrechnung 15, die in Figur 5 erläutert wurde. Die auf die Umrechnung 15 Einfluß nehmenden Meßwerte des Prozesses sind in Figur 4 dargestellt durch Meßstationen 14, namentlich solchen Meßstationen, die als Meßeinrichtungen bestimmte Parameter der Produkttypen 1, 2, p bis j nach physikalischer Beeinflussung in der Station S1 messen. Jedem Produkttyp ist ein bestimmter Parameter zugeordnet, der bei ihm gemessen wird. Es können auch mehrere Parameter eines Produkttypes gemessen werden, zumindest einer ist aber erforderlich. Aus den aus einer Stichprobe entnommenen Meßwerten wird ein Mittelwert gebildet und dieser Mittelwert findet sich bei der Umrechnung 15, die in Figur 5 zwischen den Funktionen 72 und 90, bzw. in der Gleichung 3.1.1 erläutert ist.

Es ist in Figur 4 nicht detaillierter dargestellt, welche physikalischen Parameter gemessen werden, weil diese Festlegung abhängig von den gefertigten Produkten ist. Im Falle einer Halbleiterfertigung können Strukturbreiten b1 oder Strukturdicken d1, d2 von bestimmten Halbleiterelementen in einem PAL oder ASIC als Anhaltspunkt dienen, die von dem jeweiligen Prozeß beeinflußt werden, nach welchem Prozeß die Messung erfolgt.

In Figur 4 ist ersichtlich, daß weitere Fertigungsprozesse S2, S3, etc., wie auch in Figur 1 dargestellt, sich anschließen können, die von den Produkttypen 1 bis j auch durchlaufen werden. Für jeden Fertigungsprozeß wird dabei eine Darstellung 20 erstellt, um die statistische Kontrolle des Prozeßflusses aus mehreren Fertigungsprozessen S1, S2, S3 zu behalten.

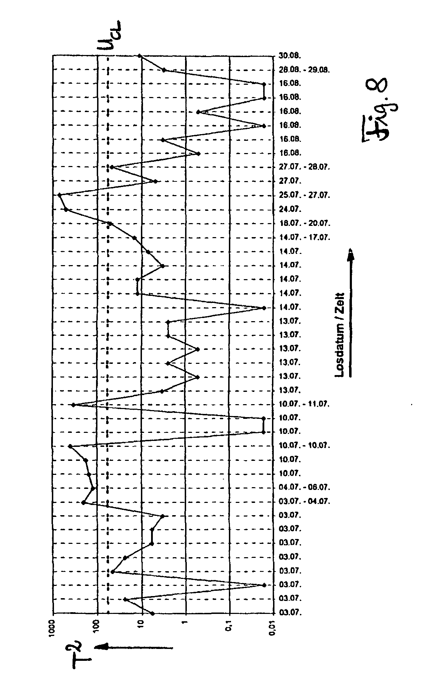

Ein Beispiel eines sich ergebenden Zustandsverlaufes der Darstellung 20 ist in **Figuren 7, 8** angegeben, die trotz ähnlichen äußeren Erscheinungsbildes gegenüber der Figur 6 eine wesentlich aussagekräftigere und übersichtlichere Darstellung beinhalten, nachdem viel mehr Prozeßinformation in den einzelnen aufgetragenen Zustandspunkten enthalten ist, als noch bei der Shewart-Karte von Figur 6. Ein Beispiel eines Ofens, in dem mit verschiedenen Prozessen vier verschiedene Schichten auf vier unterschiedliche Produkte aufgebracht werden, ist im Ergebnis in den Figuren 7 und 8 dargestellt und wird am Ende erläutert.

Das Verfahren liefert eine übersichtliche und komprimierte Darstellung des Fertigungsprozesses, mit deren Hilfe man den statistischen Zustand des Prozesses und die Qualität der gefertigten Produkte "auf einen Blick" beurteilen kann. Aufgrund der Kombination der Produktmittelwerte der einzelnen Produkte liegt das Einsatzgebiet in der übergeordneten Analyse des Fertigungsprozesses z.B. durch den SPC-Beauftragten oder Linienleiter.

Als statistische Grundlage dient Hotellings $T^2$-Statistik, die eine Verallgemeinerung des univariaten t-Tests darstellt. Gl. 3.1.1 zeigt die Hotelling-Statistik.

$$T^2 = N(\overline{m} - \overline{\overline{m}})^T \, S^{-1} (\overline{m} - \overline{\overline{m}}) \qquad \text{Gl. 3.1.1}$$

$T^2$ : Wert der Testverteilung (Zustandswert)
$N$ : Stichprobengröße
$\overline{m}$ : Vektor der Stichprobenmittelwerte
$\overline{\overline{m}}$ : Vektor der Produktmittelwerte
$S$ : Kovarianzmatrix

Vereinfacht ausgedrückt ist eine graphisch aufgetragene Mehrproduktkontrolle, ebenso wie die klassischen Kontrollkarten, ein Hypothesentest. Getestet wird, ob sich der Durchschnittswert einer Stichprobe vom bekannten bzw. ausreichend gut geschätzten Mittelwert der Grundgesamtheit unterscheidet. Liegt der Wert der Testverteilung innerhalb der vorher festgelegten Kontrollgrenzen, so wird die Hypothese "Stichprobe gehört zur ursprünglichen Grundgesamtheit" angenommen. Der Prozeß ist mit hoher Wahrscheinlichkeit unter statistischer Kontrolle. Liegt der Wert der Testverteilung außerhalb der Kontrollgrenzen, so muß mit hoher Wahrscheinlichkeit die eben genannte Hypothese verworfen werden. Der Prozeß ist nicht mehr unter statistischer Kontrolle.

Die Kontrollgrenze wird so gewählt, daß die Wahrscheinlichkeit eines Fehlers vom Typ I oder Typ II sehr gering wird. Typ I-Fehler: Die Hypothese wird fälschlicherweise verworfen, Typ II-Fehler: Die Hypothese wird fälschlicherweise angenommen.

Die Mehrproduktkontrolle trifft Aussagen über die Kombination von Produkten. Tritt eine Grenzverletzung auf, so bedeutet das, daß der betrachtete Fertigungsprozeß mit hoher Wahrscheinlichkeit nicht mehr unter statistischer Kontrolle ist. Hinsichtlich der Qualität der gefertigten Produkte bei einer Kontrollgrenzenverletzung kann man zwischen 2 Fällen unterscheiden: Entweder zeigt sich bei Betrachtung der dazugehörigen Produktmittelwerte, daß eines oder mehrere Produkte ihre Kontrollgrenze (z.B. die 3σ-Grenze) verletzt haben, oder es ergibt sich, daß viele Produkte gleichzeitig nahe an ihrer Kontrollgrenze liegen. Hier sind zwar die gefertigten Produkte hinsichtlich der Qualität noch in Ordnung, die statistische Stabilität des Prozesses muß jedoch trotzdem angezweifelt werden, da es sehr unwahrscheinlich ist, daß viele Produkte gleichzeitig nahe an ihrer Kontrollgrenze liegen.

Wurde ein Produkt im betrachteten Zeitraum nicht gefertigt, so wird als "Meßwert" der Produktmittelwert als ein geschätzter Mittelwert der Grundgesamtheit des Produkts angenommen. Dieses Produkt beeinflußt dann nicht den Wert der Testverteilung.

Neben der Überwachung von Kontrollgrenzenüberschreitung bietet die Mehrproduktkontrolle noch weitere Auswertemöglichkeiten. Durch die zeitlich chronologische Anordnung und Darstellung der Daten eines Fertigungsprozesses können längerfristige Trends, die bei der Prozeßüberwachung mit Einzelkarten aufgrund der unterschiedlichen Fertigungshäufigkeiten nicht sichtbar werden, gut erkannt werden. Damit bietet die Mehrproduktkontrolle im Vergleich zum Monitoring mit Einzelkarten mehr Informationen über den zu überwachenden Prozeß.

Da alle zu überwachenden Produkte denselben Prozeßschritt durchlaufen, wird der Stichprobenmittelwert eines Produkts, der nach der Fertigung aus den Stichprobenmeßwerten ermittelt wird, mit den Stichprobenmittelwerten der anderen Produkte korrelieren. Je nach Stärke der Korrelationen zwischen den Produkten ändert sich die Wahrscheinlichkeit alle oder mehrere Produkte auf einem bestimmten Wert relativ zu ihren Mittelwerten anzutreffen. Sind die Produkte stark miteinander korreliert, so ist die Wahrscheinlichkeit hoch, daß, sofern ein Produkt eine gewisse Abweichung vom Produktmittelwert besitzt, auch viele andere eine ebenso große Abweichung von ihren jeweiligen Produktmittelwerten besitzen. Bei geringen Korrelationen zwischen den Produkten sinkt diese Wahrscheinlichkeit. Die Stärke der Korrelationen zwischen den Produkten hat somit Einfluß auf den Wert der Testverteilung $T^2$ und die Lage der Kontrollgrenze. Deswegen werden die Korrelationen zwischen den Produkten bestimmt und evtl. in bestimmten Zeitabständen angepaßt.

Für den praktischen Einsatz ist, wie bei den klassischen Kontrollkarte auch, die sog. IIND-Bedingung erfüllt. Sie sagt aus, daß die Daten, die mit Hilfe der Kontrolle analysiert werden sollen, voneinander unabhängig und normalverteilt sein müssen. Diese Forderung wird in der Praxis oft stillschweigend vorausgesetzt. Hier bedeutet die IIND-Bedingung, daß zum einen alle Vektoren der Stichprobenmittelwerte voneinander unabhängig sind, zum anderen die Mittelwerte der Stichproben der einzelnen Produkte multinormalverteilt sind.

Die genaue Lage einer Kontrollgrenze für die Mehrproduktkontrolle stärkt ihre Aussagekraft. Bei klassischen Shewart-Karten wird die Kontrollgrenze z.B. so gelegt, daß bei Werten der Testverteilung, die weiter als die 3-fache Standardabweichung (3 σ-Grenze) vom Mittelwert entfernt liegen, eine Grenzüberschreitung auftritt. Dieses Verhalten sollte auch bei einer Mehrproduktkontrolle erreicht werden Falls also eines der Produkte aus der momentanen Produktkombination seine 3σ-Grenze verletzt, soll das die Mehrproduktkontrolle mit einer Grenzüberschreitung quittieren.

Bei nicht zu starken Korrelationen zwischen den verschiedenen Produkten kann eine Kontrollgrenze $U_{CL}$ berechnet werden, indem man jeden Produkttyp nacheinander auf z.B. seinen 3-Sigma-Wert setzt, während die jeweiligen anderen Produkttypen auf ihren Produktmittelwert gesetzt werden. Diese Vektoren werden der Hotelling-Statistik unterworfen. Der kleinste so gebildete $T^2$-Zustandswert stellt die Kontrollgrenze $U_{CL}$ dar.

Die Funktionsweise der Mehrproduktkontrolle soll anhand eines Beispiels weiter verdeutlicht werden. Dazu wird ein Ofen betrachtet, in dem mit Hilfe verschiedener Prozesse vier verschiedene Schichtdicken auf 4 unterschiedliche Produkte aufgebracht werden. Einer der Produkte stammt aus einem häufiger genutzten Produkttyp, die anderen Produkte haben kleinere Losgrößen und werden seltener gefertigt.

Die Zielsetzung ist es die Schichtdicken aller 4 Produkte zu überwachen. Um eine komprimierte Darstellung zur erhalten, werden die Produkte zu einem Datenpunkt bei der Mehrproduktkontrolle zusammengefaßt, sofern die unterschiedlichen Produkte innerhalb eines Zeitraums von max. 4 Tagen gefertigt werden. Werden an dem betrachteten Ofen eines oder mehrere der vier betrachteten Produkte nicht innerhalb des maximalen Zeitraums von 4 Tagen physikalisch beeinflußt (gefertigt), so wird für den zu errechnenden Zustandswert (Datenpunkt) der Produktmittelwert des spezifischen Produktes angenommen und der Zustandswert nach Ablauf des maximalen Zeitraums berechnet. Der maximale Zeitraum kann erheblich variieren, abhängig von den zu fertigenden Produkten, er kann zwischen mehreren Stunden und mehreren Tagen betragen, war in dem hier betrachteten Beispiel aber aufgrund des thermisch langsamen Ofens eher hoch angesiedelt und beträgt die genannten vier Tage. Der hier angenommene maximale Zeitraum entspricht in Figur 3 dem dort dargestellten Zeitraum zwischen den Zeitpunkten $t_3$ und $t_4$.

Zur Darstellung wurden die Mittelwerte, Varianzen und Kovarianzen ermittelt. Daraus wurde die 4x4-Kovarianzmatrix aufgestellt (Gl. 3.15) und invertiert (Gl. 3.16):

$$S = \begin{bmatrix} 0,133 & 0,120 & -0,005 & 0,305 \\ 0,120 & 0,410 & 0,117 & 0,290 \\ -0,005 & 0,117 & 0,720 & 1,000 \\ 0,305 & 0,290 & 1,000 & 8,808 \end{bmatrix} \qquad \text{Gl. 3.15}$$

$$S^{-1} = \begin{bmatrix} 11,661 & -3,461 & 1,239 & -0,431 \\ -3,461 & 3,599 & -0,723 & 0,084 \\ 1,239 & -0,723 & 1,829 & -0,227 \\ -0,431 & 0,084 & -0,227 & 0,152 \end{bmatrix} \qquad \text{Gl. 3.16}$$

Die Kontrollgrenze wird im Beispiel zu $U_{CL}$=59,28 gewählt.

Immer dann, wenn eines der vier Produkte seine 3σ-Grenze in einer Shewart-Karte überschreitet, ergibt sich auch eine Grenzverletzung bei der Mehrproduktkontrolle von **Figur 7, 8**. Liegt eines oder mehrere der Produkte nahe der 3σ-Grenze, so liegt auch der Zustandswert der Mehrproduktkontrolle in der Nähe der Kontrollgrenze $U_{CL}$. Die hier getroffene Feststellung der Übereinstimmung mit einer Grenzverletzung bei einer Shewart-Karte ist nicht bildlich dargestellt, nachdem die Shewart-Karten der vier betrachteten Produkte nicht einzeln gezeigt werden. Nachdem aber deutlich ersichtlich die Grenze $U_{CL}$ gestrichelt eingezeichnet ist, ist an den Figuren 7 und 8 erkennbar, welche Zustandswerte gemäß **Figur 5** Alarm auslösen.

Zusammenfassend kann man sagen, daß eine Mehrproduktkontrolle oder eine Mehrproduktkontrolldarstellung als Ergänzung zu den klassischen Einzelkarten in einer flexiblen Fertigung deutliche Vorteile bringt. Neben der einfachen und übersichtlichen Überwachung der Produktqualität kann die statistische Stabilität der Fertigungsprozesse einfach und übersichtlich überwacht werden. Die Anzahl der zu überwachenden Karten wird durch die Einführung der Mehrproduktkontrolle drastisch reduziert. Wegen der zeitlichen Komprimierung und der Darstellung von Produktkombinationen eignet sich die Mehrproduktkontrolle besonders gut für Qualitätsmanagement, längerfristige Analysen und als Grundlage für die Erkennung von Trends.

**Patentansprüche**

1. Verfahren zur Überwachung der Qualität einer Vielzahl von insbesondere verschiedenen technischen Produkttypen (P,P',P'', P'''), die in einem quasiparallelen Fertigungsprozeß hergestellt werden, wobei der Fertigungsprozeß mehrere sequentielle Fertigungsstationen (S1,S2,S3) besitzt und für zumindest eine (S1) der Fertigungsstationen der Verlauf einer Zustandsgröße ($T^2$) punktweise ermittelt und dargestellt (20) wird, wobei
vor dem Fertigungsprozeß

(a) eine Anzahl der zu überwachenden Produkttypen als erste Typenzahl (j) festgelegt wird;
(b) ein technischer Produktparameter (d1,d2,b1), der in der zumindest einen Fertigungsstation (S1) beeinflußt wird, festgelegt wird und eine Messeinrichtung (10,11,12) dieser Fertigungsstation zugeordnet wird, um diesen technischen Produktparameter für zumindest einen der überwachten Produkttypen (S1) zu messen;
im Fertigungsprozeß
(c) ein Produkttyp aus der ersten Typenzahl von Produkttypen in seinem physikalischen Zustand in der Fertigungsstation (S1) geändert wird, danach eine Stichprobe des geänderten Produkttyps genommen wird und mit der Meßeinrichtung für den festgelegten technischen Produktparameter der Stichprobe zugehörige Meßwerte bestimmt werden;
(d) ein eigener Mittelwert ($\overline{m}_p$) aus den Meßwerten berechnet wird und dieser Mittelwert ($\overline{m}_p$) in einem der ersten Typenzahl zugeordneten mehrdimensionalen Mittelwert ($\overline{m}$) gespeichert wird;
(e) die Schritte (c) und (d) zur Ergänzung des mehrdimensionalen Mittelwerts ($\overline{m}$) mit zumindest einem weiteren gemessenen Mittelwert ($\overline{m}_{p+1}$) für zumindest einen weiteren Produkttyp (P') wiederholt werden;
(f) nach Ablauf einer festgelegten Zeitspanne (T1) der gespeicherte mehrdimensionale Mittelwert, bestehend aus mehreren einzelnen Mittelwerten, gemeinsam in einen Zustandswert umgerechnet (15) und als Punkt ($T_a$, $T_b$,$T_c$) für den Verlauf der Zustandsgröße ($T^2$(t)) gespeichert oder bildlich dargestellt wird (20).

**2.** Verfahren nach Anspruch 1, bei dem die erste Zeitspanne so festgelegt wird, daß entweder ein vorgegebenes maximales Zeitintervall ($T_{max}$) verstrichen ist oder einer der ersten Typenzahl von Produkttypen erneut in derselben zumindest einen Fertigungsstation (S1) physikalisch zu beeinflussen ist, insbesondere die erste Typenzahl von Produkttypen (alle) die zumindest eine Fertigungsstation (S1) durchlaufen haben.

**3.** Verfahren nach Anspruch 1, bei dem der Zustandswert aus dem mehrdimensionalen Mittelwert anhand einer $T^2$-Hotelling-Statistik errechnet wird, wobei vor der Berechnung (15) der mehrdimensionale Mittelwert von einem vorgegebenen mehrdimensionalen Mittelwert ($\overline{\overline{m}}$) subtrahiert wird bzw. vice versa, um lediglich die Abweichung des gemessenen mehrdimensionalen Mittelwerts von dem vorgegebenen Mittelwertvektor bei der Berechnung zu berücksichtigen.

**4.** Verfahren nach dem vorhergehenden Anspruch 3, bei dem der vorgegebene mehrdimensionale Mittelwert ($\overline{\overline{m}}$) aus einer Mehrzahl von Vorlaufmessungen (k) in einem Fertigungsprozeß ermittelt wird, insbesondere im Fertigungsprozeß aktualisiert wird.

**5.** Verfahren nach einem der vorhergehenden Ansprüche, bei dem die technischen Produktparameter eine Schichtdicke (d1,d2), eine Strukturbreite (b1), eine Strukturlänge oder Störfaktoren, wie Defektdichten oder Partikeldichten, sowie sonstige Längenmaße in, an oder auf den Produkttypen sind, insbesondere in einem Verfahren zur Fertigung von Halbleitern auf Wafem oder zur Fertigung von kundenspezifischen Halbleiterbausteinen mit jeweils pro Produkttyp vorgegebener eigener Struktur.

**6.** Verfahren nach Anspruch 2, bei dem die maximale Zeitspanne ($T_{max}$) zwischen mehreren Stunden und mehreren Tagen beträgt, insbesondere abhängig von einer Auslastung der Fertigungsstationen (S1, S2, S3), dem Produkttyp, der Anzahl der Produkttypen als Typenanzahl oder der maximalen Zeitauflösung.

**7.** Verfahren nach einem vorhergehender Ansprüche, bei dem ein Grenzwert ($U_{CL}$) festgelegt wird, um den Verlauf der Zustandsgröße ($T^2$; $T_a$, $T_b$, $T_c$) mit dem Grenzwert zu vergleichen und ein Signal, insbesondere eine Meldung, auszugeben, wenn der Verlauf der Zustandsgröße mit zumindest einem Punkt den vorgegebenen Grenzwert ($U_{CL}$) überschreitet.

**8.** Verfahren nach einem voriger Ansprüche, bei dem die bildliche Darstellung (20) auf einem Monitor oder ausgedruckt auf einer Karte erfolgt.

**9.** Verfahren nach Anspruch 1, bei dem der Mittelwert ($\overline{m}_p$) eines Produkttyps in der ersten Typenzahl von Produkttypen hinsichtlich des ihn betreffenden technischen Produktparameters bei der Umrechnung (15) gemäß Ziffer (f) auf einen vorgegebenen Mittelwert ohne Einfluß von Meßwerten gesetzt wird, wenn der zugehörige Produkttyp während einer maximalen Zeitspanne ($T_{max}$) nicht in der Fertigungsstation (S1) in seinem physikalischen Zustand beeinflußt worden ist.

**10.** Verfahren nach Anspruch 1, bei dem der gespeicherte mehrdimensionale Mittelwert (auch) jedesmal dann in einen hypothetischen Punkt aus dem Verlauf der Zustandsgröße umgerechnet wird (90,15), wenn ein neuer gemessener Mittelwert ($\overline{m}_p$) im mehrdimensionalen Mittelwert ergänzt wurde.

**11.** Verfahren nach Anspruch 4 oder 9, bei dem der oder jeder vorgegebene Mittelwert ($\overline{\overline{m}}$) für alle überwachten Produkttypen neu festgelegt wird, wenn sich die erste Typenzahl ändert.

**12.** Vorrichtung oder Einrichtung zur Überwachung der Qualität einer Vielzahl von insbesondere verschiedenen technischen Produkten (P,P',P"), die in einem quasiparallelen Fertigungsprozeß hergestellt werden, wobei mehrere Fertigungsstationen (S1,S2,S3) vorgesehen sind und für zumindest eine (S1) der Fertigungsstationen der Verlauf einer Zustandsgröße ($T^2$) punktweise ermittelbar (20) ist, und

(a) eine Anzahl der zu überwachenden Produkte als erste Typenzahl (j) festgelegt wird;
(b) ein technischer Produktparameter (d1,d2,b1) der Produkte, der in der zumindest einen Fertigungsstation (S1) beeinflußt wird, festgelegt wird und eine Messeinrichtung (10,11,12) dieser Fertigungsstation zugeordnet wird, um diesen technischen Produktparameter für zumindest einen der zu überwachenden Produkte nach der Beeinflussung durch diese Fertigungsstation (S1) zu messen;
im Fertigungsprozeß
(c) in der Fertigungsstation (S1) ein Produkt aus der ersten Typenzahl von Produkten in seinem physikalischen Zustand änderbar ist, danach eine Stichprobe des geänderten Produkttyps erfaßbar ist und mit der Meßeinrichtung (10,11,12) für den festgelegten technischen Produktparameter Meßwerte ($m_1$, $m_2$, $m_N$) bestimmbar ist;

(d) eine Recheneinrichtung einen eigenen Mittelwert ($\overline{m}_p$) berechnet, der aus den Meßwerten aus der Meßeinrichtung folgt, und dieser Mittelwert ($\overline{m}_p$) in einem der ersten Typenzahl (j) zugeordneten mehrdimensionalen Mittelwert ($\overline{m}$) speicherbar ist;

wobei der gespeicherte mehrdimensionale Mittelwert aus mehreren einzelnen Mittelwerten, gemeinsam in einen Zustandswert umgerechnet und als Punkt ($T_a$,$T_b$,$T_c$) für den Verlauf der Zustandsgröße ($T^2(t)$) gespeichert wird oder bildlich darstellbar ist (20).

13. Vorrichtung nach Anspruch 12, bei dem mit einer Subtrahiereinrichtung der gespeicherte Mittelwertvektor vor der Umrechnung (15) von einem vorgegebenen Mittelwertvektor ($\overline{m}$) subtrahierbar ist bzw. vice versa, um eine mehrdimensionale Abweichung des gemessenen Mittelwertvektors von dem vorgegebenen Mittelwertvektor zu berücksichtigen.

14. Verfahren nach Anspruch 1, wobei der Fertigungsprozeß mehrere Fertigungsstationen (S1,S2,S3) besitzt und für zumindest eine (S1) der Fertigungsstationen der Verlauf einer Zustandsgröße ($T^2$) punktweise ermittelt wird, wobei

(a) die Anzahl der zu überwachenden Produkte als die erste Typenzahl (j) festgelegt wird, die größer als Eins ist;

(b) der technische Produktparameter (d1,d2,b1), der in der zumindest einen Fertigungsstation (S1) beeinflußt wird, festgelegt wird und die Meßeinrichtung (10,11,12) dieser Fertigungsstation zugeordnet wird, um diesen technischen Produktparameter bei den zu überwachenden Produkten nach dem Beeinflussen in der Fertigungsstation (S1) zu messen;

und im Fertigungsprozeß

(c) das Produkt aus der ersten Typenzahl von Produkten in seinem physikalischen Zustand in der Fertigungsstation (S1) geändert wird, danach die Stichprobe des geänderten Produkttyps genommen wird und mit der Meßeinrichtung (10,11,12) für den festgelegten technischen Produktparameter Meßwerte ($m_1$, $m_2$, $m_N$) ermittelt werden;

(d) der eigene Mittelwert ($\overline{m}_p$) berechnet wird, der aus den Meßwerten der Meßeinrichtung berechnet wird, und dieser Mittelwert ($\overline{m}_p$) als der eindimensionale Wert in einem der ersten Typenzahl (j) zugeordneten mehrdimensionalen Mittelwert ($\overline{m}$) gespeichert wird;

der gespeicherte mehrdimensionale Mittelwert, bestehend aus mehreren eindimensionalen Mittelwerten, gemeinsam in einen Zustandswert umgerechnet und als der Punkt ($T_a$,$T_b$,$T_c$) für den Verlauf der Zustandsgröße ($T^2(t)$) gespeichert oder bildlich dargestellt wird (20), wobei der Zustandswert anhand einer $T^2$-Hotelling-Statistik errechnet wird.

15. Verfahren nach Anspruch 1 oder 14, wobei die technischen Produkte verschiedene bzw. technisch unterschiedliche Produkte sind.

16. Verfahren nach Anspruch 15, wobei der überwachte technische Produktparameter bei verschiedenen technischen Produkten im Wesentlichen derselbe ist.

17. Verfahren nach Anspruch 1, wobei der Zustandswert anhand einer $T^2$-Hotelling-Statistik errechnet wird.

18. Verfahren nach Anspruch 1 oder 14, wobei eine Speicherung und eine Darstellung (20) zumindest des neu ermittelten Zustandswertes erfolgt.

19. Verfahren nach Anspruch 1 oder 14, wobei die Verfahrensschritte (c) und (d) für denselben technischen Produktparameter eines weiteren der zu überwachenden Produkttypen durchgeführt werden, wobei der "eigene Mittelwert" als ein "weiterer eigener Mittelwert" an einer anderen Stelle des mehrdimensionalen Mittelwerts gespeichert wird.

20. Verfahren nach Anspruch 1 oder 14, wobei die Anzahl der eindimensionalen Mittelwerte (Skalare) in dem mehrdimensionalen Mittelwert zumindest der ersten Typenzahl (j) entspricht.

**21.** Verfahren nach Anspruch 1 oder 14, wobei die Umrechnung in den Zustandswert bereits dann erfolgt, wenn noch nicht alle eindimensionalen Werte seit einer zeitlich direkt vorhergehenden Umrechnung in einen zeitlich vorhergehenden Zustandswert durch aktuelle Messwerte und ihren jeweils zugehörigen eindimensionalen Mittelwert erneuert worden sind.

**Claims**

**1.** Process for monitoring the quality of a number of in particular different technical product types (P,P',P", P'''), which are produced in a quasi-parallel manufacturing process, wherein the manufacturing process has several sequential manufacturing stations (S1,S2,S3) and the course of a state parameter ($T^2$) is determined point-wise for at least one (S1) of the manufacturing stations and represented (20),
wherein
before the manufacturing process

(a) a number of product types to be monitored is established as first type number (j);
(b) a technical product parameter (d1,d2,b1), which is influenced in the at least one manufacturing station (S1), is established and a measuring device (10, 11, 12) is assigned to this manufacturing station, in order to measure this technical product parameter for at least one of the monitored product types (S1);
in the manufacturing process
(c) a product type from the first type number of product types is changed in its physical state in the manufacturing station (S1), then a random sample of the changed product type is taken and associated measured values are determined for the established technical product parameter of the random sample using the measuring device;
(d) a separate average value ($\overline{m}_p$) is calculated from the measured values and this average value ($\overline{m}_p$) is stored in a multi-dimensional average value ($\overline{m}$) assigned to the first type number;
(e) the steps (c) und (d) are repeated to supplement the multi-dimensional average value ($\overline{m}$) with at least one further measured average value ($\overline{m}_{p+1}$) for at least one further product type (P');
(f) after an established time span (T1) has lapsed, the stored multi-dimensional average value, consisting of several individual average values, is converted (15) jointly into a state value and stored as a point ($T_a,T_b,T_c$) for the course of the state parameter ($T^2(t)$) or represented (20) pictorially.

**2.** Process according to claim 1, in which the first time span is established so that either a preset maximum time interval ($T_{max}$) has lapsed or one of the first type number of product types can be physically influenced again in the same at least one manufacturing station (S1), in particular the first type number of product types (all) which have passed through at least one manufacturing station (S1).

**3.** Process according to claim 1, in which the state value is calculated from the multi-dimensional average value using $T^2$-hotelling statistics, wherein before the calculation (15), the multi-dimensional average value is subtracted from a preset multi-dimensional average value ($\overline{\overline{m}}$) or vice versa, in order to take into account only the deviation of the measured multi-dimensional average value from the preset average value vector during the calculation.

**4.** Process according to the preceding claim 3, in which the preset multi-dimensional average value ($\overline{\overline{m}}$) is determined from a plurality of advance measurements (k) in a manufacturing process, in particular is actualised in the manufacturing process.

**5.** Process according to one of the preceding claims, in which the technical product parameters are a layer thickness (d1,d2), a structural width (b1), a structural length or interfering factors, such as defect densities or particle densities, as well as other length dimensions in, against or on the product types, in particular in a process for manufacturing semiconductors on wafers or for manufacturing client-specific semiconductor components with in each case per product type of preset separate structure.

**6.** Process according to claim 2, in which the maximum time span ($T_{max}$) is between several hours and several days, in particular depending on loading of the manufacturing stations (S1, S2, S3), the product type, the number of product types as type number or the maximum timing resolution.

**7.** Process according to one of preceding claims, in which a limiting value ($U_{CL}$) is established, in order to compare the course of the state parameter ($T^2$; $T_a$, $T_b$, $T_c$) with the limiting value and to emit a signal, in particular a message, when the course of the state parameter exceeds the preset limiting value ($U_{CL}$) by at least one point.

**8.** Process according to one of previous claims, in which the pictorial representation (20) takes place on a monitor or expressed on a card.

**9.** Process according to claim 1, in which the average value ($\overline{m}_p$) of a product type in the first type number of product types with regard to the techncial product parameter relating to it, is placed over a preset average value in the calculation (15) according to figure (f) without influencing measured values when the associated product type has not been influenced in its physical state in the manufacturing station (S1) during a maximum time span ($T_{max}$).

**10.** Process according to claim 1, in which the stored multi-dimensional average value is (also) converted (90, 15) each time in a hypothetical point from the course of the state parameter when a new measured average value ($\overline{m}_p$) has been supplemented in the multi-dimensional average value.

**11.** Process according to claim 4 or 9, in which the or any preset average value ($\overline{\overline{m}}$) is newly established for all monitored product types when the first type number is changed.

**12.** Apparatus or device for monitoring the quality of a number of in particular different technical products (P,P',P"), which are produced in a quasi-parallel manufacturing process, wherein several manufacturing stations (S1,S2,S3) are provided and the course of a state parameter ($T^2$) can be determined (20) point-wise for at least one (S1) of the manufacturing stations, and

(a) a number of products to be monitored is established as first type number (j);
(b) a technical product parameter (d1,d2,b1) of the products, which is influenced in the at least one manufacturing station (S1), is established and a measuring device (10,11,12) is assigned to this manufacturing station, in order to measure this technical product parameter for at least one of the products to be monitored after influence of this manufacturing station (S1);
in the manufacturing process
(c) in the manufacturing station (S1) a product from the first type number of products can be changed in its physical state, then a random sample of the changed product type can be recorded and measured values ($m_1$, $m_2$, $m_N$) can be determined for the established technical product parameter using the measuring device (10,11,12);
(d) a computing device calculates a separate average value ($\overline{m}_p$), which follows from the measured values from the measuring device, and this average value ($\overline{m}_p$) can be stored in a multi-dimensional average value ($\overline{m}$) assigned to the first type number (j);

wherein the stored multi-dimensional average value, made up of several individual average values, is converted jointly into a state value and stored as a point ($T_a,T_b,T_c$) for the course of the state parameter ($T^2(t)$) or can be represented (20) pictorially.

**13.** Apparatus according to claim 12, in which the stored average value vector is subtracted before the calculation (15) from a preset average value vector ($\overline{\overline{m}}$) using a subtracting device or vice versa, in order to take into account a multi-dimensional deviation of the measured average value vector from the preset average value vector.

**14.** Process according to claim 1, wherein the manufacturing process has several manufacturing stations (S1,S2,S3) and the course of a state parameter ($T^2$) is determined point-wise for at least one (S1) of the manufacturing stations, wherein

(a) the number of products to be monitored is established as the first type number (j), which is greater than one;
(b) the technical product parameter (d1,d2,b1), which is influenced in the at least one manufacturing station (S1), is established and the measuring device (10,11,12) is assigned to this manufacturing station, in order to measure this technical product parameter for the products to be monitored after influencing in the manufacturing station (S1);
and in the manufacturing process
(c) the product from the first type number of products is changed in its physical state in the manufacturing staion (S1), then the random sample of the changed product type is taken and measured values ($m_1$, $m_2$, $m_N$) are determined for the established technical product parameter using the measuring device (10, 11, 12);
(d) the separate average value ($\overline{m}_p$) is calculated, which is calculated from the measured values of the measuring device, and this average value ($\overline{m}_p$) is stored as the one-dimensional value in a multi-dimensional average value ($\overline{m}$) assigned to the first type number (j);

the stored multi-dimensional average value, consisting of several one-dimensional average values, is converted jointly into a state value and stored as the point ($T_a$,$T_b$,$T_c$) for the course of the state parameter ($T^2$(t)) or represented (20) pictorially, wherein the state value is calculated using $T^2$-hotelling statistics.

**15.** Process according to claim 1 or 14, wherein the technical products are different or technically different products.

**16.** Process according to claim 15, wherein the monitored technical product parameter for different technical products is essentially the same.

**17.** Process according to claim 1, wherein the state value is calculated using $T^2$-hotelling statistics.

**18.** Process according to claim 1 or 14, wherein storing and representation (20) at least of the newly determined state value takes place.

**19.** Process according to claim 1 or 14, wherein the process steps (c) and (d) are carried out for the same technical product parameter of a further of the product types to be monitored, wherein the "separate average value" is stored as a "further separate average value" at a different point of the multi-dimensional average value.

**20.** Process according to claim 1 or 14, wherein the number of one-dimensional average values (scalars) in the multi-dimensional average value corresponds at least to the first type number (j).

**21.** Process according to claim 1 or 14, wherein the conversion into the state value even takes place when still not all one-dimensional values have been renewed since a temporally directly preceding conversion into a temporally preceding state value by actual measured values and their particular associated one-dimensional average value.

**Revendications**

**1.** Procédé pour le contrôle de la qualité de plusieurs types de produits techniques (P, P', P", P''') notamment différents qui sont fabriqués dans un processus de fabrication quasi parallèle, le processus de fabrication ayant plusieurs postes de fabrication séquentiels (S1, S2, S3) et la courbe d'une grandeur d'état ($T^2$) étant déterminée ponctuellement et représentée (20) pour au moins l'un (S1) des postes de fabrication,
dans lequel
avant le processus de fabrication

(a) on fixe un nombre des types de produits à contrôler comme premier nombre de types (j) ;
(b) on fixe un paramètre technique de produit (d1, d2, b1) qui est influencé dans le ou les postes de fabrication (S1) et on associe un dispositif de mesure (10, 11, 12) à ce poste de fabrication pour mesurer ce paramètre technique de produit pour au moins l'un des types de produits contrôlés (S1);
pendant le processus de fabrication
(c) dans le poste de fabrication (S1), on modifie l'état physique d'un type de produit parmi le premier nombre de types de produits, puis on prend un échantillon du type de produit modifié et on détermine avec le dispositif de mesure des valeurs mesurées associées pour le paramètre technique de produit fixé de l'échantillon ;
(d) on calcule une valeur moyenne particulière ($\overline{m}_p$) à partir des valeurs mesurées et on mémorise cette valeur moyenne ($\overline{m}_p$) dans une valeur moyenne multidimensionnelle ($\overline{m}$) associée au premier nombre de types ;
(e) on répète les étapes (c) et (d) pour compléter la valeur moyenne multidimensionnelle ($\overline{m}$) avec au moins une autre valeur moyenne mesurée ($\overline{m}_{p+1}$) pour au moins un autre type de produit (P') ;
(f) à la fin d'un intervalle de temps fixé ($T1$), on convertit par calcul (15) la valeur moyenne multidimensionnelle mémorisée, constituée de plusieurs valeurs moyennes individuelles, pour obtenir conjointement une valeur d'état et on la mémorise ou la représente figurativement (20) comme point ($T_a$, $T_b$, $T_c$) pour la courbe de la grandeur d'état ($T^2$(t)).

**2.** Procédé selon la revendication 1, dans lequel on fixe le premier intervalle de temps de telle sorte que soit un intervalle de temps maximal prédéterminé ($T_{max}$) est écoulé soit un type de produit parmi le premier nombre de types de produits est à nouveau physiquement à influencer dans le ou les mêmes postes de fabrication (S1), notamment le premier nombre de types de produits (tous) ont passé le ou les postes de fabrication (S1).

3. Procédé selon la revendication 1, dans lequel on calcule la valeur d'état à partir de la valeur moyenne multidimensionnelle à l'aide d'une statistique Hotelling-$T^2$, la valeur moyenne multidimensionnelle étant soustraite avant le calcul (15) d'une valeur moyenne multidimensionnelle prédéterminée ($\overline{\overline{m}}$) ou vice-versa pour ne prendre en compte lors du calcul que l'écart entre la valeur moyenne multidimensionnelle mesurée et le vecteur de valeurs moyennes prédéterminé.

4. Procédé selon la revendication précédente 3, dans lequel on détermine la valeur moyenne multidimensionnelle prédéterminée ($\overline{\overline{m}}$) à partir de plusieurs mesures d'avance (k) dans un processus de fabrication, notamment on l'actualise pendant le processus de fabrication.

5. Procédé selon l'une des revendications précédentes, dans lequel les paramètres techniques de produit sont une épaisseur de couche (d1, d2), une largeur de structure (b1), une longueur de structure ou des facteurs parasitaires, tels la densité de défauts ou la densité de particules, ainsi que d'autres mesures de longueur dans ou sur les types de produits, notamment dans un procédé de fabrication de semi-conducteurs sur des tranches de silicium ou de fabrication de composants à semi-conducteurs spécifiques au client avec à chaque fois une structure prédéterminée convenant à chaque type de produit.

6. Procédé selon la revendication 2, dans lequel l'intervalle de temps maximal ($T_{max}$) vaut entre plusieurs heures et plusieurs jours, notamment en fonction d'une charge de travail des postes de fabrication (S1, S2, S3), du type de produit, du nombre des types de produits comme nombre de types ou de la résolution temporelle maximale.

7. Procédé selon l'une des revendications précédentes, dans lequel on fixe une valeur limite ($U_{CL}$) pour comparer la courbe de la grandeur d'état ($T^2$ ; $T_a$, $T_b$, $T_c$) à la valeur limite et pour délivrer un signal, notamment un avertissement, lorsque la courbe de la grandeur d'état dépasse avec au moins un point la valeur limite prédéterminée ($U_{CL}$).

8. Procédé selon l'une des revendications précédentes, dans lequel la représentation figurative (20) s'effectue sur un moniteur ou sous forme imprimée sur une carte.

9. Procédé selon la revendication 1, dans lequel la valeur moyenne ($\overline{m}_p$) d'un type de produit dans le premier nombre de types de produits est mise pour le paramètre technique de produit qui la concerne, lors du calcul (15) selon le point (f), à une valeur moyenne prédéterminée sans influence de valeurs mesurées lorsque l'état physique du type de produit associé n'a pas été influencé dans le poste de fabrication (S1) pendant un intervalle de temps maximal ($T_{max}$).

10. Procédé selon la revendication 1, dans lequel on convertit par calcul (90, 15) la valeur moyenne multidimensionnelle mémorisée en un point hypothétique de la courbe de la grandeur d'état (aussi) à chaque fois qu'une nouvelle valeur moyenne mesurée ($\overline{m}_p$) a été complétée dans la valeur moyenne multidimensionnelle.

11. Procédé selon la revendication 4 ou 9, dans lequel on fixe de nouveau la ou chaque valeur moyenne prédéterminée ($\overline{\overline{m}}$) pour tous les types de produits contrôlés lorsque le premier nombre de types varie.

12. Dispositif ou appareil pour le contrôle de la qualité de plusieurs produits techniques (P, P', P'') notamment différents qui sont fabriqués dans un processus de fabrication quasi parallèle, plusieurs postes de fabrication (S1, S2, S3) étant prévus et la courbe d'une grandeur d'état ($T^2$) pouvant être déterminée ponctuellement (20) pour au moins l'un (S1) des postes de fabrication, et dans lequel

(a) un nombre des produits à contrôler est fixé comme premier nombre de types (j) ;
(b) un paramètre technique de produit (d1, d2, b1) qui est influencé dans le ou les postes de fabrication (S1) est fixé et un dispositif de mesure (10, 11, 12) est associé à ce poste de fabrication pour mesurer ce paramètre technique de produit pour au moins l'un des produits à contrôler après l'influence causée par ce poste de fabrication (S1) ;
pendant le processus de fabrication
(c) dans le poste de fabrication (S1), l'état physique d'un produit parmi le premier nombre de types de produits peut être modifié, puis un échantillon du type de produit modifié peut être saisi et des valeurs mesurées ($m_1$, $m_2$, $m_N$) peuvent être déterminées avec le dispositif de mesure (10, 11, 12) pour le paramètre technique de produit fixé ;

(d) un dispositif de calcul calcule une valeur moyenne particulière ($\overline{m}_p$) à partir des valeurs mesurées provenant du dispositif de mesure et cette valeur moyenne ($\overline{m}_p$) peut être mémorisée dans une valeur moyenne multidimensionnelle ($\overline{m}$) associée au premier nombre de types (j) ;

la valeur moyenne multidimensionnelle mémorisée, constituée de plusieurs valeurs moyennes individuelles, étant convertie par calcul pour obtenir conjointement une valeur d'état et pouvant être mémorisée ou représentée figurativement (20) comme point ($T_a$, $T_b$, $T_c$) pour la courbe de la grandeur d'état ($T^2(t)$).

13. Dispositif selon la revendication 12, dans lequel, avec un soustracteur, le vecteur de valeurs moyennes mémorisé peut être soustrait avant le calcul (15) d'un vecteur de valeurs moyennes prédéterminé ($\overline{\overline{m}}$) ou vice-versa pour prendre en compte un écart multidimensionnel entre le vecteur de valeurs moyennes mesuré et le vecteur de valeurs moyennes prédéterminé.

14. Procédé selon la revendication 1, dans lequel le processus de fabrication comporte plusieurs postes de fabrication (S1, S2, S3) et dans lequel on détermine ponctuellement la courbe d'une grandeur d'état ($T^2$) pour au moins l'un (S1) des postes de fabrication, dans lequel

(a) on fixe le nombre des produits à contrôler comme premier nombre de types (j) qui est supérieur à un ;

(b) on fixe le paramètre technique de produit (d1, d2, b1) qui est influencé dans le ou les postes de fabrication (S1) et on associe le dispositif de mesure (10, 11, 12) à ce poste de fabrication pour mesurer ce paramètre technique de produit sur les produits à contrôler après l'influence dans le poste de fabrication (S1) ; et pendant le processus de fabrication

(c) dans le poste de fabrication (S1), on modifie l'état physique du produit parmi le premier nombre de types de produits, puis on prend l'échantillon du type de produit modifié et on détermine avec le dispositif de mesure (10, 11, 12) des valeurs mesurées ($m_1$, $m_2$, $m_N$) pour le paramètre technique de produit fixé ;

(d) on calcule la valeur moyenne particulière ($\overline{m}_p$) qui est calculée à partir des valeurs mesurées du dispositif de mesure et on mémorise cette valeur moyenne (m p) comme valeur unidimensionnelle dans une valeur moyenne multidimensionnelle (m) associée au premier nombre de types (j) ;

la valeur moyenne multidimensionnelle mémorisée, constituée de plusieurs valeurs moyennes unidimensionnelles, étant convertie par calcul pour obtenir conjointement une valeur d'état et pouvant être mémorisée ou représentée figurativement (20) comme point ($T_a$, $T_b$, $T_c$) pour la courbe de la grandeur d'état ($T^2(t)$), la valeur d'état étant calculée à l'aide d'une statistique Hotelling-$T^2$.

15. Procédé selon la revendication 1 ou 14, dans lequel les produits techniques sont des produits différents ou techniquement différents.

16. Procédé selon la revendication 15, dans lequel le paramètre technique de produit contrôlé est globalement le même pour les différents produits techniques.

17. Procédé selon la revendication 1, dans lequel la valeur d'état est calculée à l'aide d'une statistique Hotelling-$T^2$.

18. Procédé selon la revendication 1 ou 14, dans lequel on effectue une mémorisation et une représentation (20) au moins de la nouvelle valeur d'état déterminée.

19. Procédé selon la revendication 1 ou 14, dans lequel on met en oeuvre les étapes de procédé (c) et (d) pour le même paramètre technique de produit d'un autre des types de produits à contrôler, la "valeur moyenne particulière" étant mémorisée comme une "autre valeur moyenne particulière" à un autre endroit de la valeur moyenne multidimensionnelle.

20. Procédé selon la revendication 1 ou 14, dans lequel le nombre des valeurs moyennes unidimensionnelles (scalaires) dans la valeur moyenne multidimensionnelle correspond au moins au premier nombre de types (j).

21. Procédé selon la revendication 1 ou 14, dans lequel la conversion par calcul destinée à donner la valeur d'état s'effectue déjà lorsque toutes les valeurs unidimensionnelles depuis une conversion par calcul directement précédente temporellement et ayant donné une valeur d'état précédente temporellement n'ont pas encore été renouvelées par des valeurs mesurées actuelles et par leur valeur moyenne unidimensionnelle respectivement associée.

$$T^2 = N \cdot \left(\overline{m} - \overline{\overline{m}}\right)^T S^{-1}\left(\overline{m} - \overline{\overline{m}}\right)$$

Fig. 1

S3

S1

S2

Prozeßfluß

$\widehat{P}^{III}$

Produkttyp
j

$(x_1 \ldots x_N)$

$\overline{m}_j$

. . .

$P''$

Produkttyp
p

$(x_1 \ldots x_N)$

$\overline{m}_p$

. . .

$P'$

Produkttyp
2

$(x_1 \ldots x_N)$

$\overline{m}_2$

$P$

Produkttyp
1

$(x_1 \ldots x_N)$

$\overline{m}_1$

Fig 6

Fig. 2

Fig.3

Fig. 4

Fig. 5

Fig. 6

Fig. 7

Fig. 8